Europäisches Patentamt

European Patent Office

Office européen des brevets

(19)

(11) Numéro de publication : **0 450 244 B1**

(12) **FASCICULE DE BREVET EUROPEEN**

(45) Date de publication du fascicule du brevet :
**01.06.94 Bulletin 94/22**

(51) Int. Cl.$^5$ : **G01D 5/26**

(21) Numéro de dépôt : **90403410.5**

(22) Date de dépôt : **30.11.90**

(54) **Dispositif de lecture de capteurs à fibres optiques.**

(30) Priorité : **01.12.89 FR 8915876**

(43) Date de publication de la demande :
**09.10.91 Bulletin 91/41**

(45) Mention de la délivrance du brevet :
**01.06.94 Bulletin 94/22**

(84) Etats contractants désignés :
**DE FR GB**

(56) Documents cités :
**EP-A- 0 251 632**
**GB-A- 2 147 695**
**US-A- 4 799 797**
**PATENT ABSTRACTS OF JAPAN, vol. 10, no.
15 (P-422)[2072], 21 janvier 1986 ; & JP-A-60 170
723**

(73) Titulaire : **THOMSON-CSF**
**173, Boulevard Haussmann**
**F-75008 Paris (FR)**

(72) Inventeur : **Refregier, Philippe**
**THOMSON-CSF,**
**SCPI,**
**Cédex 67**
**F-92045 Paris la Défense (FR)**
Inventeur : **Turpin, Marc**
**THOMSON-CSF,**
**SCPI,**
**Cédex 67**
**F-92045 Paris la Défense (FR)**

(74) Mandataire : **Chaverneff, Vladimir et al**
**THOMSON-CSF**
**SCPI**
**B.P. 329**
**50, rue Jean-Pierre Timbaud**
**F-92402 Courbevoie Cédex (FR)**

Jouve, 18, rue Saint-Denis, 75001 PARIS

## Description

La présente invention se rapporte à un dispositif de lecture de capteurs à fibres optiques.

Pour décoder les informations en provenance d'un réseau de capteurs multiplexés en cohérence, il est nécessaire de compenser les déphasages à l'aide d'un dispositif interférométrique de lecture. Suivant l'architecture du réseau de capteurs, on utilise des interféromètres de type Mach-Zehnder à fibres optiques ou des interféromètres de type Michelson. Dans le cas particulier du multiplexage en faible cohérence, l'utilisation de fibres optiques non biréfringentes est délicate compte tenu de la précision requise pour l'ajustage de la longueur des tronçons de fibre utilisés dans les interféromètres passifs de type Mach-Zehnder. Dans le cas général, l'interféromètre de Michelson est largement utilisé en laboratoire compte tenu de sa grande versatilité et de sa facilité d'emploi. Cependant, l'emploi hors laboratoire, par exemple en site industriel, est très délicat, en particulier à cause de la fragilité des miroirs mobiles de cet interféromètre.

L'invention a pour objet un dispositif de lecture de capteurs à fibres optiques qui soit de faible encombrement, facile à régler et à utiliser, qui puisse être employé dans un environnement hostile (milieu industriel, matériel embarqué...), qui présente une sensibilité au moins égale à celle des interféromètres connus, tout en gardant une bonne dynamique, et qui ait un temps de réponse le plus faible possible.

On connaît d'après le document US-A-4 799 797 un dispositif interférométrique de lecture en optique intégrée. Afin de mesurer les déphasages provenant du capteur, ce document préconise compter les franges d'interférence, ou, comme alternatif preferé, asservir l'interféromètre en reliant le détecteur de sortie de l'interféromètre en contre-réaction à un modulateur de phase d'un des bras. Le signal de contre-réaction est alors le signal à mesurer.

Le dispositif de lecture de capteurs à fibres optiques conforme à l'invention comporte un interféromètre en optique intégrée à deux bras de longueurs différentes, suivi d'un détecteur relié en contre-réaction par un circuit d'asservissement au modulateur de phase, un dispositif de mesure recevant comme signal à mesurer le signal de contre-réaction du circuit d'asservissement, et il est caractérisé par le fait que le circuit d'asservissement est couplé à un système compteur-décompteur de sauts de franges d'interférence.

Selon une autre caractéristique de l'invention, au moins un des bras de l'interféromètre comporte un modulateur de phase relié au circuit d'asservissement. Ainsi, selon l'invention, l'interféromètre à deux bras de longueurs différentes permet de compenser le retard moyen entre les deux trains d'ondes, produits à partir de l'onde optique d'une source faiblement cohérente, ce retard étant fonction de la grandeur à mesurer, la mesure consistant à déterminer une grandeur nécessaire à l'asservissement de l'interféromètre. Ainsi, on réalise la mesure sans déplacement mécanique, d'où une meilleure sensibilité du lecteur, tout en gardant une bonne dynamique, ce lecteur étant de faible encombrement et présentant un faible temps de réponse.

La présente invention sera mieux comprise à la lecture de la description détaillée de plusieurs modes de réalisation, pris à titre d'exemples non limitatifs et illustrés par le dessin annexé, sur lequel :

- la figure 1 est un diagramme d'un signal recueilli par un détecteur associé à un dispositif à capteurs par cohérence et à un lecteur de l'art antérieur,
- la figure 2 est un diagramme d'un signal recueilli par un détecteur associé à un dispositif à capteurs par cohérence et à un lecteur conforme à l'invention,
- la figure 3 est un diagramme expliquant le principe de fonctionnement pour la lecture de signaux à retard important, à l'aide d'un lecteur conforme à l'invention,
- la figure 4 est un bloc-diagramme d'un dispositif de lecture conforme à l'invention,
- la figure 5 est un bloc-diagramme d'une variante d'une partie du dispositif de lecture de la figure 4,
- la figure 6 est le bloc-diagramme simplifié d'un dispositif de lecture conforme à l'invention pour la lecture de signaux multiplexés.
- les figures 8 et 10 sont des schémas d'interféromètres utilisés par l'invention, et

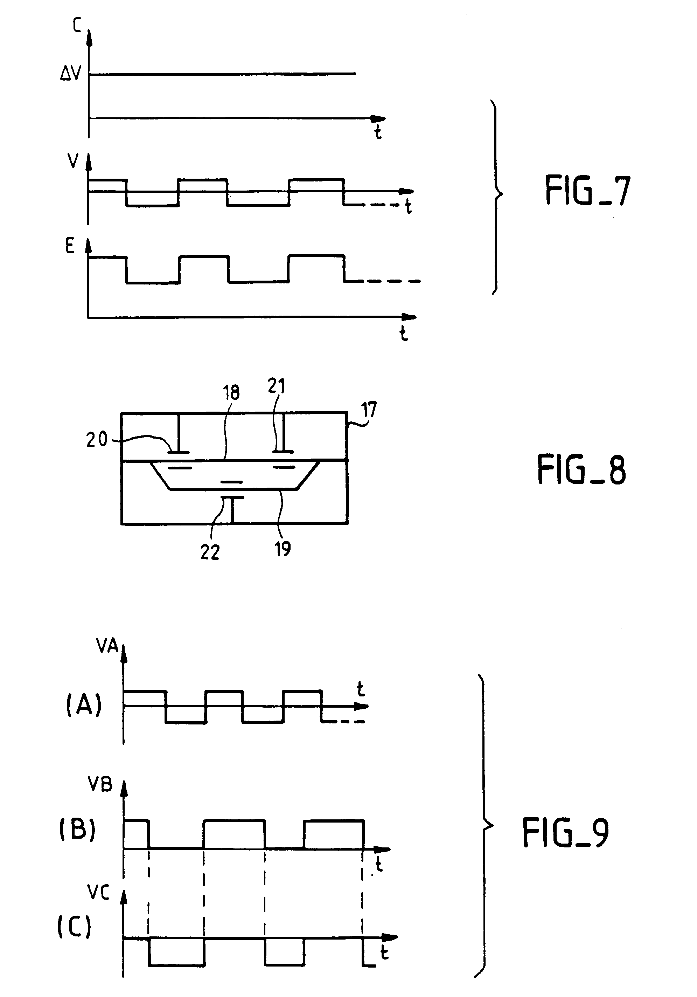

- les figures 7, 9 et 11 sont des diagrammes de formes d'ondes utilisées dans le circuit d'asservissement de l'invention.

On va tout d'abord décrire le principe de la mesure de grandeurs physiques à l'aide de capteurs à fibres optiques fonctionnant par cohérence. Le fonctionnement par cohérence veut dire que l'information concernant la grandeur physique à mesurer est contenue dans le retard (c'est-à-dire le déphasage) entre deux trains d'ondes optiques générés à partir d'une onde unique produite par une source faiblement cohérente (longueur d'onde de cohérence inférieure à quelques centaines de microns).

Quelques ordres de grandeur permettent de préciser l'intérêt des méthodes de cohérence par rapport aux autres techniques (modulation de l'intensité de l'onde optique, modulation du retard entre deux impulsions ou d'un signal modulé en fréquence, etc...). La longueur de cohérence $l_c$ peut être aussi petite que 30 $\mu$m. Avec des sources à diodes superluminescentes, un bon couplage avec des fibres optiques monomodes peut être obtenu: puissance couplée de l'ordre de 100$\mu$W.

Du point de vue du traitement du signal, de telles caractéristiques sont analogues à celles qu'on obtiendrait avec des impulsions de $10^{-14}$ s et des puissances crêtes de $10^8$ W.

Le principe de la mesure est le suivant. Pour les capteurs par cohérence, la mesure ne peut être réalisée que par corrélation. En effet, l'onde optique générée par une source à faible cohérence est un signal aléatoire, ce qui interdit de réaliser la mesure à l'aide de techniques de filtrage. Cette situation présente de fortes analogies avec les radars dits radars à bruit qui en dépit de leur fonction d'ambiguïté temps-fréquence très attrayante sont en pratique peut utilisés. En général, la technique de compression d'impulsions qui permet une analyse par filtrage est très souvent préférée à celle des radars à bruit.

Si on note A(t) l'onde optique émise par la source, le capteur génère une seconde onde A(t - $\mathscr{C}$ ) qui ne diffère de la première que par le retard $\mathscr{C}$ . La mesure de ce retard (ou déphasage) permet de déterminer la valeur de la grandeur physique (température, pression, etc...). A la sortie de la partie capteur de la fibre optique, l'onde optique totale est $A_T(t) = A(t) + A(t - \mathscr{C})$, et l'on se trouve par hypothèse dans le cas où ce retard est très supérieur au temps de cohérence de la source $\mathscr{C}_c$ :

$$\mathscr{C} \gg \mathscr{C}_c = \ell_c/c$$

où c est la célérité de la lumière.

D'un point de vue pratique, cela signifie que la valeur moyenne sur un intervalle de temps T (suffisamment grand devant la période de l'onde optique) du produit (fonction de corrélation): $A(t).A(t - \mathscr{C})$ est nulle, soit:

$$\frac{1}{T} \int_T A(t).A(t- \mathscr{C})dt \simeq 0$$

Dans la suite on notera cette valeur moyenne par la notation symbolique < >:

$$\frac{1}{T} \int_T f(t)\ dt = <f(t)>.$$

Une mesure directe de l'onde $A_T(t)$ ne permet donc pas de déterminer $\mathscr{C}$. Il faut générer deux ondes à partir de $A_T(t)$ afin de compenser ce retard $\mathscr{C}$ avant d'effectuer des interférences sur un détecteur. Donc à partir de $A_T(t)$ on génère deux nouvelles ondes $A_{T1}(t)$ et $A_{T2}(t)$ de telle sorte que:

$$A_{T1}(t) = k\,A_T(t) = k' \{A(t) + A(t - \mathscr{C})\}$$

$$A_{T2}(t) = k\,A_T(t- \mathscr{C}_R) = k'\ \{A(t- \mathscr{C}_R) + A(t- \mathscr{C}- \mathscr{C}_R)\}$$

k et k' étant des facteurs de proportionnalité.

Si maintenant ( $\mathscr{C} - \mathscr{C}_R$ ) est inférieur au temps de cohérence, ce qu'on nommera plus simplement "rattrapage du retard", l'interférence de $A_{T1}(t)$ et $A_{T2}(t)$ sur un détecteur contiendra un terme proportionnel à

3

$< A(t).A(t - \Delta \mathscr{C} ) >$ où $\Delta \mathscr{C} = \mathscr{C} - \mathscr{C}_R$.

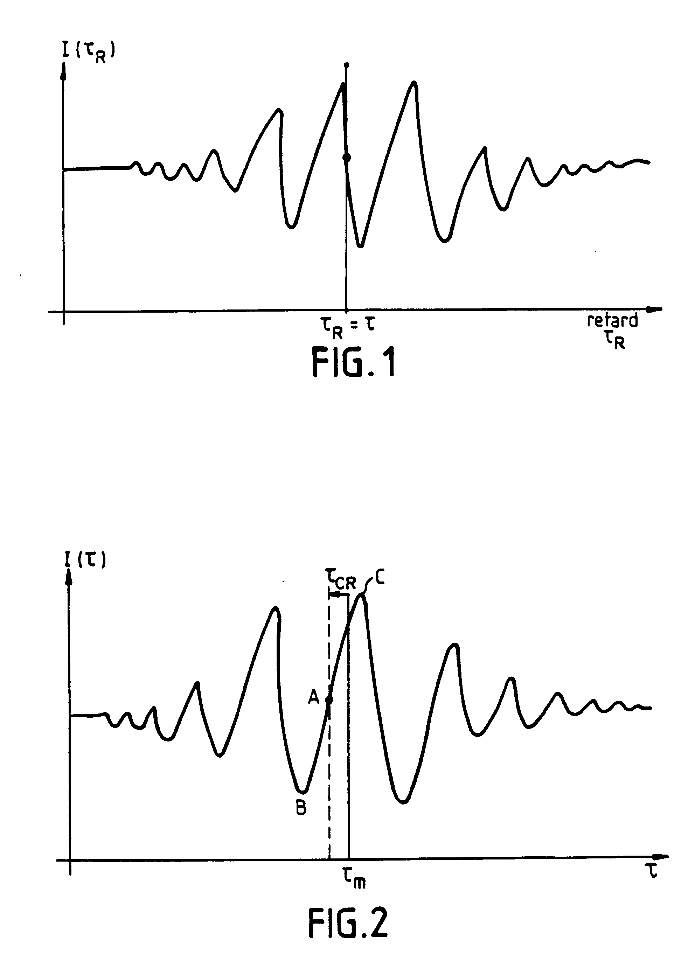

Le signal qu'on observe sur un détecteur en fonction de $\mathscr{C}_R$ a donc l'allure représentée en figure 1.

Selon l'invention, on utilise un interféromètre en optique intégrée (IOI) dont les deux bras présentent une différence de longueur correspondant à un retard $\mathscr{C}_o$ égal au retard moyen $\mathscr{C}_m$, $\mathscr{C}_m$ étant le retard moyen par rapport à la grandeur physique à mesurer. Une fois ce retard moyen compensé, on asservit le signal d'interférence à une valeur de consigne et on réalise la mesure de préférence sur le signal de contre-réaction après étalonnage du dispositif de lecture. L'asservissement est effectué en utilisant un des bras de l'interféromètre comme modulateur de phase, ce qui est à priori aisé avec un I.0.I.

On se trouve dans la situation illustrée par le diagramme de la figure 2 où $\mathscr{C}_{CR}$ représente le retard de contre-réaction introduit par le modulateur de phase. On a donc: $\mathscr{C} = \mathscr{C}_m + \mathscr{C}_{CR}$ connaissant $\mathscr{C}_m$ a priori et $\mathscr{C}_{CR}$ par la tension de commande du signal de contre-réaction, on en déduit $\mathscr{C}$, c'est-à-dire le retard dû au capteur et donc la valeur de la grandeur physique à mesurer. Sur la courbe de la figure 2, le point A, présentant un retard $\mathscr{C}_{CR}$, doit être situé sensiblement à mi-chemin entre les points B (minimum) et C (maximum), c'est-à-dire sensiblement au milieu d'une zone BC de grande amplitude, ceci afin d'obtenir, lors de la détection du signal de modulation alternatif d'asservissement, un rapport signal sur bruit optimal. Le circuit d'asservissement est décrit ci-dessous.

On a examiné le retard que l'on peut induire avec un modulateur de phase optique intégrée qui est de l'ordre de $\lambda$, la longueur d'onde optique. Il est clair qu'il existe des situations où la différence entre le retard moyen $\mathscr{C}_m$ (introduit par la différence de longueur entre les deux chemins optiques de l' I.0.I) et le retard $\mathscr{C}$ (dû à la partie capteur de la fibre optique) peut être supérieur à la longueur d'onde.

Selon l'invention, la solution à ce problème consiste à coupler le système de contre-réaction du dispositif d'asservissement à un système de compteur-décompteur permettant de réaliser des sauts d'une frange d'interférence à l'autre.

Ce principe est donc le suivant: si le retard $\mathscr{C}_{CR}$ à générer est supérieur à un déphasage de $\P$, on effectue un saut de tension négatif correspondant à un déphasage de $2\P$ et on ajoute au compteur une unité.

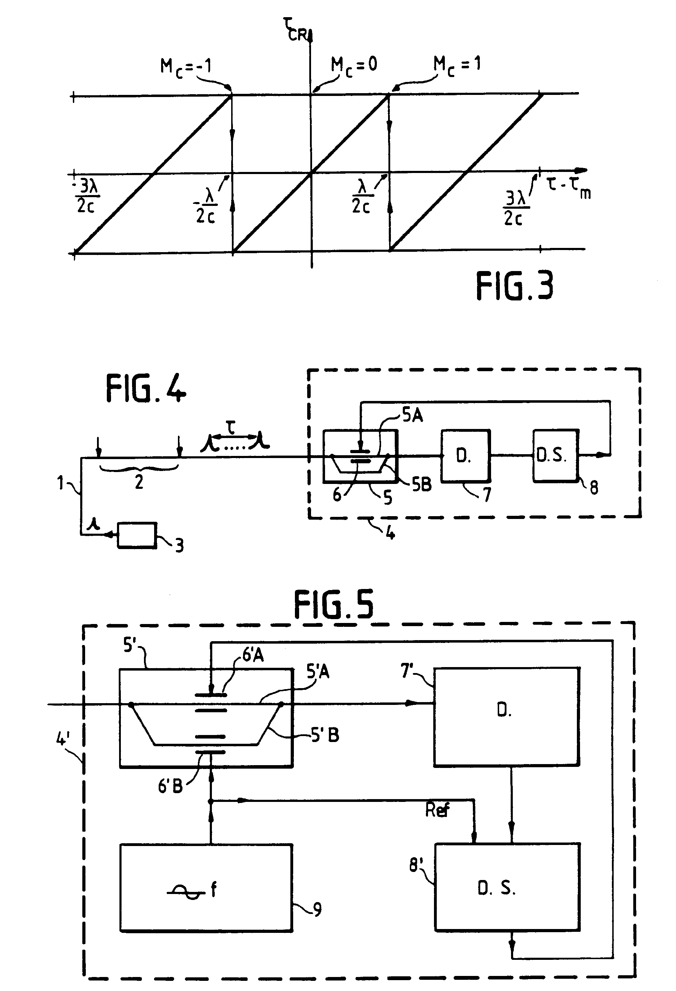

Pour la situation symétrique où le déphasage à générer est inférieur à -$\P$, on réalise cette fois un saut de tension positif (correspondant à un déphasage de $2\P$) et on soustrait une unité au compteur. On se trouve donc dans la situation illustrée en figure 3. Sur cette figure, $M_c$ représente la valeur du compteur et c la célérité de la lumière (retard: $\lambda/c$ <---> déphasage à générer égal à $2\P$).

On va maintenant mentionner les ordres de grandeur des précisions que l'on peut atteindre avec le dispositif de l'invention.

On considère le cas très simple d'un capteur de température en silice: $dn/dT \sim 10^{-5}$ dont la longueur générant le retard $\ell$ est de 1 cm. Si on suppose que la précision de l'asservissement et de l'ordre de $10^{-3}$ $2\P$ rd (ce qui correspond à une contrainte peu sévère), la précision sur la température sera:

$$2\P \cdot \frac{\ell}{\lambda} (dn/dt) \cdot dT = 10^{-3} \times 2\P$$

$$dT = \frac{\lambda}{\ell (d\,n/d\,t)} \cdot 10^{-3}$$

$$= 10^{-2} \,^{\circ}C$$

si $\lambda = 1$ µm, et $\ell_c$ étant la longueur de cohérence de la source, le nombre de franges présentes dans le signal sera: $\ell_c/\lambda$. La dynamique sera donc, si $l_c \simeq 30$ µm

$$\Delta T = \frac{\ell_c}{\lambda} \cdot 100^{\circ} \simeq 3000^{\circ}C \text{ (100°C étant le } \Delta T \text{ pour } 2\P \text{ rd)},$$

ce qui est actuellement largement supérieur aux possibilités technologiques de la fibre optique.

Afin d'asservir le signal du détecteur à une valeur de consigne, il est avantageux de travailler sur la dérivée des franges d'interférence. Ceci signifie qu'on doit superposer à la valeur de la tension de commande qui gé-nère $\mathscr{C}_{CR}$ une faible tension alternative: $\varepsilon \cos(\omega t)$ et analyser à l'aide d'une détection synchrone la valeur du signal à fréquence $2(\omega/2\P)$. Cette tension de commande est une tension qui varie proportionnellement à la variation du déphasage à mesurer. Ses variations sont lentes en comparaison de la fréquence du signal de modulation servant à la détection synchrone. L'asservissement est ainsi réalisé en recherchant à annuler ce signal d'erreur.

Les interféromètres en optique-intégrée ont des bandes passantes pouvant être de l'ordre de plusieurs GHz, cette méthode de mesure peut donc permettre d'analyser des grandeurs physiques rapidement variables.

Cette méthode ne permet pas une mesure absolue de la grandeur physique à annuler. Des erreurs peuvent s'accumuler sur le compteur-décompteur, et il est nécessaire de procéder à un étalonnage régulier pour redéfinir précisément le zéro du compteur. Ce problème n'est pas particulier à cette méthode de mesure, et le réétalonnage sur un signal de référence est une solution bien connue en soi.

On va maintenant décrire en référence à la figure 4, un exemple de réalisation de lecteur conforme à l'invention. Une fibre optique 1 comporte une section 2 servant de capteur de grandeur physique. La fibre 1 est alimentée par une source 3 au moins faiblement cohérente, et est reliée à un dispositif de lecture 4 chargé d'analyser le retard $\mathscr{C}$ produit dans le capteur 2. Selon l'invention, le dispositif 4 comporte un interféromètre 5 qui présente deux bras 5A, 5B de longueurs différentes, le bras 5A étant le plus court. Leur différence de longueur pouvant par exemple être comprise entre 100 $\mu$m et 1 cm environ.

Selon un mode de réalisation préféré, l'interféromètre 5 est du type Mach-Zehnder en optique intégrée. L'interféromètre 5 comporte sur l'un de ses deux bras, par exemple le bras 5A, un modulateur de phase 6. La sortie de l'interféromètre 5 est reliée à un détecteur classique 7, lui-même relié à un détecteur synchrone 8. La sortie du détecteur 8 est reliée en contre-réaction au modulateur de phase 6.

Selon la variante représentée en figure 5, le dispositif de lecture 4' comporte un interféromètre 5', également en optique intégrée, à deux bras 5'A, 5'B de longueurs inégales, le bras 5'A étant le plus court. Sur chacun des bras 5'A, 5'B on dispose un modulateur de phase, respectivement 6'A, 6'A. La sortie de l'interféromètre 5' est reliée à un détecteur classique 7', lui-même relié à un détecteur synchrone 8'. Un générateur 9 de tension sensiblement sinusoïdale, produisant une tension de fréquence f, est relié à une entrée de tension de référence du détecteur 8' au modulateur 6'B. La sortie du détecteur 8' est reliée au modulateur 6'A. Sur cette sortie du détecteur 8', on recueille la composante de fréquence 2f, démodulée.

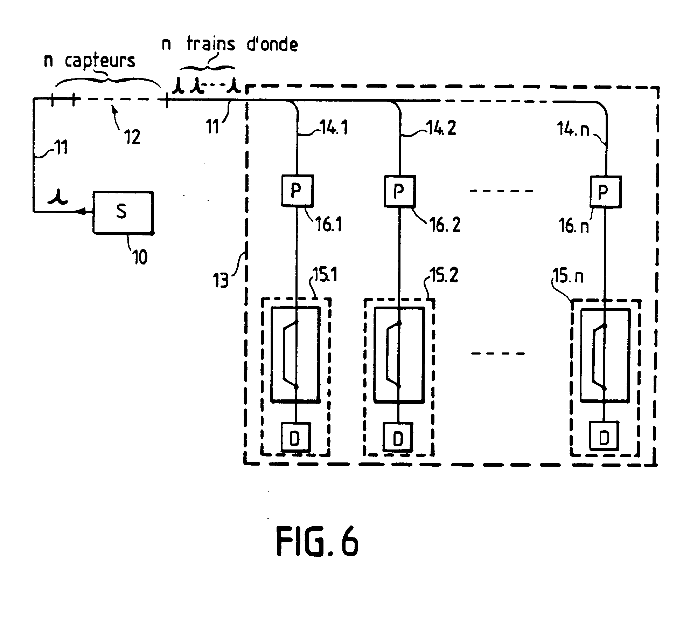

On a représenté en figure 6, un dispositif de lecture pour capteurs multiplexés par cohérence. Une source 10 d'impulsions lumineuses est reliée à une fibre optique 11 dans laquelle est inséré un dispositif de mesure 12. Ce dispositif 12 comporte n capteurs qui sont soit des capteurs différents, soit des sections de capteurs d'une même fibre optique. Le dispositif de lecture 13 branché à la sortie du dispositif 12 est chargé de mesurer n retards de trains d'onde générés par les n capteurs. Le dispositif de lecture 13 comporte n branches de dérivation 14.1 à 14.n à partir d'une fibre principale 11' reliée à la sortie du dispositif 12. Sur chacune des branches 14.1 à 14.n, on branche un dispositif de lecture 15.1 à 15.n (non représenté en détail) tel que le dispositif 4 ou le dispositif 4'. Ces dispositifs 15.1 à 15.n sont éventuellement précédés chacun d'un polariseur 16.1 à 16.n, les interféromètres étant asservis chacun de la façon représentée en figure 4 ou en figure 5. Le principe de fonctionnement de capteurs multiplexés en cohérence a été décrit par exemple dans les Demandes de Brevets français n° 88 00780 et 88 00781. Bien entendu, les n interféromètres en optique intégrée du dispositif de lecture 13 peuvent être réalisés sur le même substrat commun, au cours d'un même processus de fabrication.

L'interféromètre de l'invention est avantageusement réalisé selon la technique des circuits en optique intégrée. Selon un premier mode de réalisation, il peut être réalisé sur un substrat tel que le $LiNbO_3$. Les bras de l'interféromètre sont des guides d'ondes optiques formés par diffusion de titane.

Selon un autre mode de réalisation, on utilise pour le substrat des circuits en optique intégrée un matériau comportant du GaAlAs ou GaInAsP. Dans ce cas, on forme les guides d'ondes optiques de préférence par épitaxie.

Etant donné que les circuits en optique intégrée ont de très faibles dimensions (largeur effective d'un interféromètre Mach-Zehnder d'environ 100 $\mu$m), on peut en fabriquer un grand nombre sur un même substrat.

Pour asservir l'interféromètre, il faut produire une tension de commande (qui peut être considérée comme une tension continue C pendant un laps de temps court par rapport à la période du signal qui la module, et qui est représentée en haut de la figure 7) à laquelle est superposé un signal alternatif V (représenté au milieu de la figure 7), qui peut être rectangulaire, mais non nécessairement, ceci afin de générer un signal d'erreur modulé E, comme représenté en bas de la figure 7. Afin de simplifier les figures 7, 9 et 11 du dessin, on a supposé que dans l'intervalle de temps très bref représenté sur ces figures, le déphasage à mesurer ne varie pas, et donc que la tension de commande ne varie pas. Bien entendu, si on considère un grand laps de temps cette tension de commande varie au rythme des variations du déphasage à mesurer, et présente des sauts de valeur à chaque fois que les variations du déphasage dépassent une fourchette de 2¶ (si, par exemple, la tension de commande a sa valeur nominale pour un déphasage compris entre -¶ et +¶, un premier saut de cette tension de commande permet de travailler dans la plage +M, +3M, un deuxième dans la plage +3¶, +5¶, etc... et il en est de même pour les valeurs négatives de déphasage: -¶, -3¶, etc...), comme cela se déduit de la figure 3.

Une première solution consiste à appliquer à un modulateur (par exemple 6'A en figure 5) la tension C et à l'autre (6'B) le signal V.

Selon une deuxième solution (figure 8), on utilise un interféromètre 17 à deux bras 18, 19. Sur l'un des bras, par exemple le bras 18, on forme deux modulateurs 20, 21, et sur l'autre un seul modulateur 22.

On applique à l'un des modulateurs du bras 18, par exemple le modulateur 20, une tension alternative de forme sensiblement rectangulaire $V_A$ à valeur moyenne nulle, telle que représentée en A sur la figure 9. On applique à l'autre modulateur 21 du bras 18 une tension sensiblement rectangulaire VB telle que représentée en B sur la figure 9, dont le niveau bas est égal à zéro et dont le niveau haut est positif. On applique au modulateur 22 une tension VC, telle que représentée en C sur la figure 8, qui est synchrone de VB, dont le niveau haut est égal à zéro, et dont le niveau bas est négatif et égal, en valeur absolue, au niveau haut de VB. La fréquence de VB et de VC doit être une fréquence plus élevée que la fréquence maximale des variations du déphasage à mesurer. La soustraction de VB et de VC donne une tension continue positive de valeur égale à l'amplitude de VB. Cette solution présente l'avantage d'éviter l'application d'une tension continue à l'un des bras de l'interféromètre, car une tension continue pourrait créer des dommages à l'optique intégrée de cet interféromètre, et provoquer du bruit électronique (bruit inversement proportionnel à la fréquence).

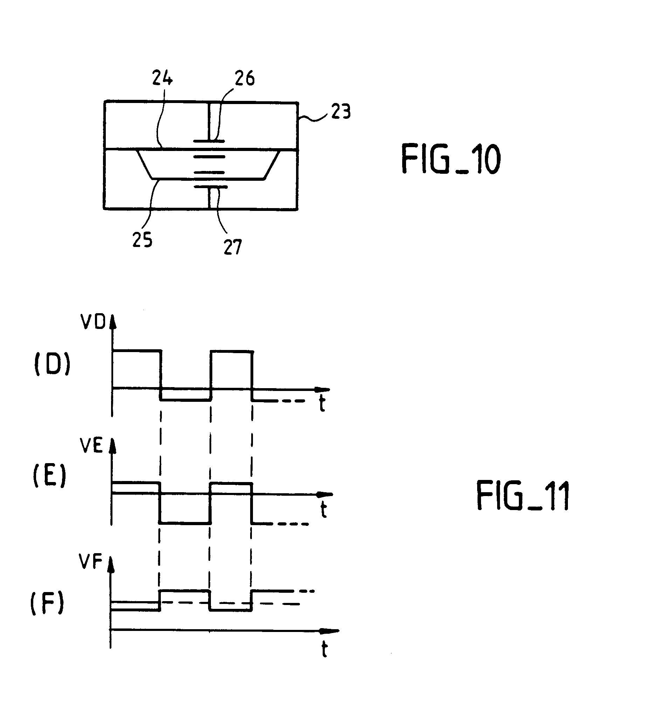

La troisième solution (figure 10) fait appel à un interféromètre 23 à deux bras 24, 25 comportant chacun un modulateur 26, 27 respectivement, interféromètre qui peut être le même que l'interféromètre 5' de la figure 5. On applique à l'un des modulateurs, par exemple 26, un signal sensiblement rectangulaire à valeur moyenne positive VD tel que représenté en D sur la figure 10, et sur l'autre modulateur un signal sensiblement rectangulaire à valeur moyenne négative synchrone de VD et tel que représenté en E sur la figure 11. Le niveau bas du signal VD est légèrement négatif, et son niveau haut est positif et de valeur supérieure à la valeur absolue du niveau bas. Le niveau haut du signal VE est légèrement positif, et son niveau bas est négatif, de valeur absolue supérieure à la valeur du niveau haut. La différence VD moins VE donne le signal VF tel que représenté en F sur la figure 11. Ce signal VF se présente comme un signal rectangulaire superposé à une composante continue positive. Cette solution présente, en plus des avantages de la solution précédente, l'avantage de ne faire appel qu'à des circuits numériques, et de ne nécessiter que deux modulateurs de phase.

Dans ces trois solutions, si l'on considère un laps de temps suffisamment long pour pouvoir observer des variations du déphasage à mesurer, la tension de commande n'est pas une droite horizontale, mais une courbe dont l'allure reflète l'allure de la courbe des variations du déphasage. Pour ne pas avoir à modifier la forme des tensions alternatives précitées (forme rectangulaire), il faut que leur fréquence soit nettement supérieure à la fréquence des variations du déphasage à mesurer.

**Revendications**

1.  Dispositif de lecture de capteurs par cohérence, comportant un interféromètre en optique intégrée (5,5') à deux bras de longueurs différentes, dont au moins un comporte un modulateur de phase, et suivi d'un détecteur (7,7') relié en contre-réaction par un circuit d'asservissement (8,6 ou 8',9,6'A,6'B) au modulateur de phase, un dispositif de mesure recevant comme signal à mesurer le signal de contre-réaction du circuit d'asservissement caractérisé par le fait que le circuit d'asservissement est couplé à un système compteur-décompteur de sauts de franges d'interférence (figure 3).

2.  Dispositif selon la revendication 1, caractérisé par le fait qu'il comporte dans son circuit d'asservissement un générateur (9) de tension sensiblement sinusoïdale relié à l'interféromètre (5') et à un détecteur synchrone (8') lui-même relié à l'interféromètre.

3.  Dispositif selon l'une des revendications précédentes, pour la lecture de n capteurs (12) disposés en série et multiplexés en cohérence, caractérisé par le fait qu'il comporte en dérivation sur une fibre principale (11') n branches (14.1 à 14.n) comportant chacune un interféromètre (15.1 à 15.n) et un détecteur (17.1 à 17.n).

**4.** Dispositif selon l'une des revendications précédentes, caractérisé par le fait que l'interféromètre du dispositif de lecture reçoit une tension de commande variant au rythme des variations du déphasage à mesurer et (C) commandant les sauts de franges d'interférence, et une tension alternative (V).

**5.** Dispositif selon la revendication 4, caractérisé par le fait qu'un bras de l'interféromètre comporte un modulateur recevant une tension de commande, et que l'autre bras comporte un modulateur recevant une tension alternative.

**6.** Dispositif selon la revendication 4, caractérisé par le fait qu'un bras (18) de l'interféromètre (17) comporte deux modulateurs (20, 21) dont l'un reçoit une tension alternative (A, figure 9) à valeur moyenne nulle et l'autre un premier signal sensiblement rectangulaire (B), l'autre bras (19) de l'interféromètre recevant un deuxième signal sensiblement rectangulaire (C) synchrone du premier, l'un des signaux sensiblement rectangulaires étant positif, et l'autre négatif, leurs amplitudes ayant des valeurs absolues égales.

**7.** Dispositif selon la revendication 4, caractérisé par le fait que l'un des bras (24) de l'interféromètre comporte un modulateur recevant un premier signal sensiblement rectangulaire (D, figure 11), l'autre bras (25) comportant un modulateur (27) recevant un second signal sensiblement rectangulaire (E) synchrone du premier, la valeur moyenne de l'un des signaux étant positive, et la valeur moyenne de l'autre étant négative.

**Claims**

**1.** Device for reading sensors coherently, comprising an integrated optics interferometer (5,5') with two arms of different lengths, at least one of which comprises a phase modulator, and followed by a detector (7, 7') connected in negative-feedback to the phase modulator by a slaving circuit (8, 6 or 8', 9, 6'A, 6'B), a measuring device receiving the negative-feedback signal of the slaving circuit as the signal to be measured, characterised in that the slaving circuit is coupled to a counting-up/counting-down system for interference fringe jumps (Figure 3).

**2.** Device according to Claim 1, characterised in that in its slaving circuit it comprises a generator (9) of substantially sinusoidal voltage, connected to the interferometer (5') and to a synchronous detector (8') itself connected to the interferometer.

**3.** Device according to one of the preceding claims, for reading n sensors (12) disposed in series and multiplexed coherently, characterised in that it comprises, shunted onto a main fibre (11'), n branches (14.1 to 14.n) each comprising an interferometer (15.1 to 15.n) and a detector (17.1 to 17.n).

**4.** Device according to one of the preceding claims, characterised in that the interferometer of the reading device receives a control voltage varying in line with the variations in the phase shift to be measured and (C) controlling the interference fringe jumps, and an a.c. voltage (V).

**5.** Device according to Claim 4, characterised in that one arm of the interferometer comprises a modulator receiving a control voltage, and in that the other arm comprises a modulator receiving an a.c. voltage.

**6.** Device according to Claim 4, characterised in that one arm (18) of the interferometer (17) comprises two modulators (20, 21) one of which receives an a.c. voltage (A, Figure 9) with nil average value, and the other a first substantially rectangular signal (B), the other arm (19) of the interferometer receiving a second substantially rectangular signal (C) synchronous with the first, one of the substantially rectangular signals being positive, and the other negative, their amplitude having equal absolute values.

**7.** Device according to Claim 4, characterised in that one of the arms (24) of the interferometer comprises a modulator receiving a first substantially rectangular signal (D, Figure 11), the other arm (25) comprising a modulator (27) receiving a second substantially rectangular signal (E) synchronous with the first, the average value of one of the signals being positive, and the average value of the other being negative.

**Patentansprüche**

1. Einrichtung zum kohärenten Lesen von Meßwertaufnehmern, mit einem Interferometer in integrierter Optik (5, 5') mit zwei Zweigen unterschiedlicher Länge, wovon wenigstens einer einen Phasenmodulator enthält, gefolgt von einem Detektor (7, 7'), der in Rückkopplung über einen Regelkreis (8, 6 oder 8', 9, 6'A, 6'B) mit dem Phasenmodulator verbunden ist, wobei eine Meßeinrichtung als zu messendes Signal das Rückkopplungssignal des Regelkreises empfängt, dadurch gekennzeichnet, daß der Regelkreis mit einem Aufwärts-/Abwärtszähler-System für die Interferenzstreifen-Sprünge (Fig. 3) verbunden ist.

2. Einrichtung gemäß Anspruch 1, dadurch gekennzeichnet, daß sie in ihrem Regelkreis einen Generator (9) für eine im wesentlichen sinusförmige Spannung enthält, der mit dem Interferometer (5') und mit einem synchronen Detektor (8') verbunden ist, welcher seinerseits mit dem Interferometer verbunden ist.

3. Einrichtung gemäß einem der vorangehenden Ansprüche zum Lesen von n Meßwertaufnehmern (12), die in Reihe angeordnet sind und kohärent multiplexiert werden, dadurch gekennzeichnet, daß sie n Zweige (14.1 bis 14.n) enthält, die von einer Hauptfaser (11') abgezweigt sind und jeweils ein Interferometer (15.1 bis 15.n) und einen Detektor (17.1 bis 17.n) enthalten.

4. Einrichtung gemäß einem der vorangehenden Ansprüche, dadurch gekennzeichnet, daß das Interferometer der Leseeinrichtung eine Steuerspannung, die sich im Takt der Veränderungen der zu messenden Phasenverschiebung verändert und (C) die Interferenzstreifen-Sprünge steuert, sowie eine Wechselspannung (V) empfängt.

5. Einrichtung gemäß Anspruch 4, dadurch gekennzeichnet, daß ein Zweig des Interferometers einen Modulator enthält, der eine Steuerspannung empfängt, und der andere Zweig einen Modulator enthält, der eine Wechselspannung empfängt.

6. Einrichtung gemäß Anspruch 4, dadurch gekennzeichnet, daß ein Zweig (18) des Interferometers (17) zwei Modulatoren (20, 21) enthält, wovon einer eine Wechselspannung (A, Fig. 9) mit Mittelwert Null und der andere ein erstes im wesentlichen rechteckiges Signal (B) empfängt, während der zweite Zweig (19) des Interferometers ein zweites im wesentlichen rechteckiges Signal (C), das zum ersten synchron ist, empfängt, wobei eines der im wesentlichen rechteckigen Signale positiv und das andere negativ ist und wobei deren Amplituden gleiche Absolutwerte besitzen.

7. Einrichtung gemäß Anspruch 4, dadurch gekennzeichnet, daß einer der Zweige (24) des Interferometers einen Modulator enthält, der ein erstes im wesentlichen rechteckiges Signal (D, Fig. 11) empfängt, und der andere Zweig (25) einen Modulator (27) enthält, der ein zweites im wesentlichen rechteckiges Signal (E) empfängt, das zum ersten synchron ist, wobei der Mittelwert eines der Signale positiv ist und der Mittelwert des anderen negativ ist.

FIG.1

FIG.2

# FIG.3

$\tau_{CR}$

$M_c = -1$     $M_c = 0$     $M_c = 1$

$-\dfrac{3\lambda}{2c}$     $-\dfrac{\lambda}{2c}$     $\dfrac{\lambda}{2c}$     $\dfrac{3\lambda}{2c}$     $\tau - \tau_m$

# FIG.4

$\tau$     $\lambda$

1     2     3

5A

6     5     5B

D.     7

D.S.     8

4

# FIG.5

5'     6'A     5'A     7'

D.

4'     5'B

6'B

Ref

8'

D. S.

$\sim f$     9

n capteurs

n trains d'onde

11

12

11

14.1

14.2

14.n

P

P

P

16.1

16.2

16.n

S

10

13

15.1

15.2

15.n

D

D

D

## FIG. 6

FIG_7

FIG_8

FIG_9

FIG_10

FIG_11